# EUROPÄISCHE PATENTSCHRIFT

(11) **EP 2 647 613 B1**
(45) Veröffentlichungstag und Bekanntmachung des Hinweises auf die Patenterteilung: **14.09.2016**
(21) Anmeldenummer: 13161319.2
(22) Anmeldetag: 27.03.2013
(51) Int. Cl.: C05D 9/02, C05G 3/00, C05G 3/04

(54) **SUBSTRAT ZUR VERWENDUNG IN BÖDEN UND VERFAHREN ZUR HERSTELLUNG EINES SUBSTRATES**
SUBSTRATE FOR USE IN SOILS AND A METHOD FOR PRODUCING A SUBSTRATE
SUBSTRAT POUR L'UTILISATION DANS LES SOLS ET PROCÉDÉ DE FABRICATION D'UN SUBSTRAT

(30) Priorität: 04.04.2012 DE 102012102957
(43) Veröffentlichungstag der Anmeldung: 09.10.2013
(73) Patentinhaber: Globachem N.V., 3800 Sint Truiden (BE)
(72) Erfinder: WEHRHAHN, Dieter, 47877 Willich (DE)
(74) Vertreter: LC Patents

(56) Entgegenhaltungen:
- WO-A1-02/00809
- WO-A1-98/12154
- DE-A1- 4 224 368
- DE-A1-102008 032 033
- DE-U1- 20 103 339
- DE-U1-202011 002 784
- DE-U1-202011 003 679

## Beschreibung

Die Erfindung betrifft ein Substrat zur Verwendung in Böden, wobei das Substrat zumindest gepressten wasserspeicherndes Material, Düngemittel, und Bindemittel umfasst.

Derartige Substrate werden im Landschafts-, Obst- und Gartenbau eingesetzt. Sie geben gespeichertes Wasser und Dünger ab. Als Nachteil erweist sich bei bekannten Substraten, dass bei zu wenig Niederschlag oder bei geringer Bodentemperatur der beabsichtigte Effekt nicht hinreichend erzielt wird. Bei zu viel Niederschlag wird das Düngemittel teilweise zu stark ausgewaschen und versickert im Boden.

WO0200809 und DE20103339 beschreiben ein Pflanz- und/oder Bodensubstrat und ein Verfahren zu dessen Herstellung. Das Substrat besteht aus einem Wasserbinder in Form von Kalium-Polyacrylat mit Fasermaterial und/oder Düngemittel. Die gepressten Pellets bestehen aus mindestens 50 Vol. % Düngemittel, 10 Vol. % Fasern, 1 Vol. % Pflanzen oder Pflanzensamen und 1 Vol. % Polyacrylat.

DE4224368 offenbart ein Bodenadditiv enthaltend Kalium-Polyacrylat, Harnstoff und/oder Nitrat und andere Pflanzennährstoffe (N, P, K). Der Polyacrylat enthält Aluminium Kupfer (III), Eisen (III), Zink und/oder Ammonium.

DE102008032033 beschreibt die Herstellung eines Formkörpers enthaltend Kaliumpolyacrylat, Perlit, Bindemittel (Natronwasserglas und/oder Kaliwasserglas und/oder Ligninverbindungen und/oder Ligninderivate), Gesteinmehl und Wasser wobei die Komponente zusammengemischt und in Pellets verpressen werden. Beim Mischvorgang stieg die Temperatur auf fünfunddreißig Grad Celsius an.

WO9812154 offenbart eine bodenverbessernde Zusammensetzung, umfassend Zellulose, Zellulosederivate und/oder zelluloseenthaltende in einer Menge von 10 bis 70 Gew.-%, wasserspeichernde Mittel wie Polyacrylat, Natriumsalze von Polyacrylaten in einer Menge von 10 bis 70 Gew.-%, Bindemittel so als Calciumsilikat oder Bentonit in einer Menge von 2 bis 50 Gew.-% und Pflanzenwachstum fördernde oder regulierende Wirkstoffe, z. B. Spurenelemente, Mineralien, Düngemittel. Zur Herstellung der Zusammensetzung werden Zellulose, Zellulosederivate und/oder Zellulose enthaltende Materialien mit einer Partikelgrösse von bis zu 1 mm, wasserbindendes Mittel und Bindemittel in Anwesenheit von Wasser miteinander vermischt, vorhandenes Wasser abgetrennt und den verbleibenden Rückstand auf ein Partikelgrösse oberhalb von 1 mm zerkleinert.

Aufgabe der Erfindung ist es, die vorgenannten Nachteile zu vermeiden und ein Substrat anzugeben, das über einen langen Zeitraum Wasser speichert und bei dem durch aufgenommenes Wasser hinreichend Düngemittel in den Boden hineingetragen werden kann.

Diese Aufgabe wird dadurch gelöst, dass das wasserspeichernde Material Kalium-Polyacrylat ohne Acrylamid umfasst und dass der Anteil an Düngemittel bezogen auf das Gesamtgewicht des Substrates zwischen 10 Gew.-% und 90 Gew.-%, vorzugsweise zwischen 50 Gew.-% und 70 Gew.-%,besonders bevorzugt bei 60 Gew.-%, liegt und dass in Abhängigkeit davon der Anteil des wasserspeichernden Materials bezogen auf das Gesamtgewicht des Substrates zwischen 90 Gew.-% und 10 Gew.-%, vorzugsweise zwischen 50 Gew.-% und 30 Gew.-%, besonders bevorzugt bei 40 Gew.-%, liegt. Ferner umfasst das Substrat ein Bindemittel in Form einer wasserfreien Flüssigkeit zwischen 1 Gew.-% und 5 Gew.-% bezogen auf das Gesamtgewicht des Substrates.

Die Gewichtsanteile beziehen sich auf das Gesamtgewicht des Substrates im Trockenzustand, d.h. ohne gespeichertes Wasser. Selbstverständlich ist das Düngemittel wasserlöslich ausgebildet. Die Struktur des wasserspeichernden Materials ist in Relation zum Düngemittel so ausgebildet, dass Wasser mit dem von dem wasserspeichernden Material umgebenden Düngemittel in Kontakt kommen kann und ein Auflösen und Auswaschen des Düngemittels möglich ist.

Das erfindungsgemäße Substrat weist eine Vielzahl an Vorteilen auf. So kann das Substrat bis zum 50-fachen seines Eigengewichts an Wasser aufnehmen und anschließend wieder der Pflanze zur Verfügung stellen. Das Düngemittel ist direkt pflanzenverfügbar. Kaliumpolyacrylat ohne Acrylamid ist, beispielsweise gegenüber Kaliumpolyacrylat mit Acrylamid oder Natriumacrylat, nicht schädlich für Pflanzen.

Das Düngemittel wird in dem aus Kaliumpolyacrylat ohne Acrylamid bestehenden Polymer gehalten und viel langsamer ausgewaschen als handelsübliche Düngemittel. Dadurch wird die Umweltbelastung reduziert. Das erfindungsgemäße Substrat kann beispielsweise im Landschafts-, Obst- und Gartenbau eingesetzt werden. Damit sind höhere Erträge beispielsweise im Obstbau erzielbar. Es eignet sich auch sehr gut für arride und semi-arride Gebiete.

Bei Verwendung des erfindungsgemäßen Substrates können die Gießintervalle um ein Vielfaches gesenkt werden, so dass der Wasserverbrauch reduziert werden kann. Die Gefahr eines Übergießens oder eines Vertrocknen der Pflanzen wird deutlich reduziert. Bei Kontakt mit Wasser quellt das Substrat auf. Durch den Quellvorgang im Boden wird die Sauerstoffzufuhr für die Pflanze erhöht.

Der im Substrat durch das Kaliumpolyacrylat ohne Acrylamid gebildete Wasserspeicher hält bis zu 5 Jahren und das Düngemittel bis zu 8 Monaten. Der durch das Kaliumpolyacrylat ohne Acrylamid gebildete Wasserspeicher ist sogar in der Lage, nachdem das mit der Herstellung eingebrachte Düngemittel verbraucht ist, neuen Flüssigdünger aufzunehmen. Das erfindungsgemäße Substrat wirkt auch abwehrend gegen Wühl- und Schermäuse.

Das wasserspeichernde Material kann vorzugsweise ausschließlich aus Kalium-Polyacrylat ohne Acrylamid bestehen.

Es bietet sich an, wenn das Substrat weiterhin zumindest ein Spurenelement, insbesondere Bor, Mangan, Molybdän, Eisen, Kupfer und/oder Zink, umfasst. Zu der Wirkweise der einzelnen Spurenelemente wird Folgendes ausgeführt:
Bor fördert das Pflanzenwachstum durch Einfluss auf die Zellteilung. Bor wird mit dem Wasserstrom in die Pflanze aufgenommen. Daher tritt ein Bormangel vor allem bei Trockenheit auf neutralen bis alkalischen Böden auf.

Mangan ist beteiligt am Kohlenhydrat- und Eiweißstoffwechsel und an der Bildung von Zellmembranen. Darüber hinaus unterstützt es die Chlorophyllsynthese und damit die Photosynthese.

Molybdän ist im weiteren am Phosphatstoffwechsel beteiligt. Bei einem Molybdänmangel werden die Wuchs- und Photosynthese gehemmt. Auch kann eine Nitratanreicherung in der Pflanze beobachtet werden.

Eisenmangel hat für viele Pflanzen gravierende Folgen. Eisen ist einer der wichtigsten Bausteine, die Pflanzen zum Wachsen und Gedeihen benötigen. Anzeichen für Eisenmangel bei Pflanzen sind gelbe Blätter und ein vermindertes Wachstum.

Pflanzen benötigen Kupfer zur Bildung von Vitamin C oder als Baustein weiterer Enzyme. Daneben trägt Kupfer zur Festigkeit und Elastizität der Pflanzen bei, da es an der Stabilität der Zellwände beteiligt ist.

Zink aktiviert bzw. ist Bestandteil verschiedener Enzyme und beeinflusst ferner verschiedenste Stoffwechselprozesse in der Pflanze.

Der Anteil aller Spurenelemente kann bezogen auf das Gesamtgewicht des Substrates zwischen 0,5 Gew.-% und 5 Gew.-%, vorzugsweise bei 1 Gew.-%, liegen.

Zumindest ein Düngemittel kann etwa 36 Gew.-% Ammoniumsalz, etwa 14 Gew.-% Phosphatsalz, etwa 14 Gew.-% Kaliumsalz, etwa 29 Gew.-% Nitratsalz und etwa 7 Gew.-% Magnesiumsalz umfassen. Bei einer solchen Zusammensetzung des Düngemittels bietet sich an, wenn der Anteil an Düngemittel bezogen auf das Gesamtgewicht des Substrates bei etwa 70 Gew.-% und der Anteil des wasserspeichernden Materials bezogen auf das Gesamtgewicht des Substrates bei etwa 30 Gew.-% liegt. Sofern das Substrat noch Spurenelemente und gegebenenfalls Bindemittel umfasst, können die Anteile an Düngemittel und wasserspeicherndem Material geringfügig geringer sein.

Zumindest ein Düngemittel kann etwa 17 Gew.-% Ammoniumsalz und etwa 83 Gew.-% Phosphatsalz umfassen. Bei einer solchen Zusammensetzung des Düngemittels bietet sich an, wenn der Anteil an Düngemittel bezogen auf das Gesamtgewicht des Substrates bei etwa 60 Gew.-% und der Anteil des wasserspeichernden Materials bezogen auf das Gesamtgewicht des Substrates bei etwa 40 Gew.-% liegt. Sofern das Substrat noch Spurenelemente und gegebenenfalls Bindemittel umfasst, können die Anteile an Düngemittel und wasserspeicherndem Material geringfügig geringer sein.

Zumindest ein Düngemittel kann etwa 14 Gew.-% Ammoniumsalz, etwa 14 Gew.-% Nitratsalz, etwa 57 Gew.-% Phosphatsalz und etwa 14 Gew.-% Magnesiumsalz umfassen. Bei einer solchen Zusammensetzung des Düngemittels bietet sich an, wenn der Anteil an Düngemittel bezogen auf das Gesamtgewicht des Substrates bei etwa 70 Gew.-% und der Anteil des wasserspeichernden Materials bezogen auf das Gesamtgewicht des Substrates bei etwa 30 Gew.-% liegt. Sofern das Substrat noch Spurenelemente und gegebenenfalls Bindemittel umfasst, können die Anteile an Düngemittel und wasserspeicherndem Material geringfügig geringer sein.

Zumindest ein Düngemittel kann etwa 15 Gew.-% Ammoniumsalz, etwa 15 Gew.-% Kaliumsalz, etwa 62 Gew.-% Phosphatsalz und etwa 8 Gew.-% Magnesiumsalz umfassen. Bei einer solchen Zusammensetzung des Düngemittels bietet sich an, wenn der Anteil an Düngemittel bezogen auf das Gesamtgewicht des Substrates bei etwa 65 Gew.-% und der Anteil des wasserspeichernden Materials bezogen auf das Gesamtgewicht des Substrates bei etwa 35 Gew.-% liegt. Sofern das Substrat noch Spurenelemente und gegebenenfalls Bindemittel umfasst, können die Anteile an Düngemittel und wasserspeicherndem Material geringfügig geringer sein.

Das erfindungsgemäße Substrat kann nur eines der zuvor genannten Düngemittel in der angegebenen Zusammensetzung umfassen. Selbstverständlich ist es aber auch möglich, dass das Substrat mehrere oder alle vorerwähnten Düngemittelvarianten umfasst.

Das Substrat umfasst ein Bindemittel in Form einer wasserfreien Flüssigkeit. Hierbei kann es sich beispielsweise um Raps- oder Sonnenblumenöl handeln.

Der Anteil an Bindemittel bezogen auf das Gesamtgewicht des Substrates liegt zwischen 1 Gew.-% und 5 Gew.-%, vorzugsweise bei 2 Gew.-%.

Die Erfindung betrifft auch ein Verfahren zur Herstellung eines Substrates zur Verwendung in Böden, wobei das Substrat als Ausgangsstoffe zumindest ein wasserspeicherndes Material, zumindest ein Düngemittel und zumindest ein Bindemittel in Form einer wasserfreien Flüssigkeit umfasst. Der Anteil an Düngemittel bezogen auf das Gesamtgewicht des Substrates liegt zwischen 10 Gew.-% und 90 Gew.-%, der Anteil des wasserspeichernden Materials bezogen auf das Gesamtgewicht des Substrates liegt zwischen 10 Gew.-% und 90 Gew.-%, und der Anteil an Bindemittel bezogen auf das Gesamtgewicht des Substrates liegt zwischen 1 Gew.-% und 5 Gew.-%.

Aufgabe der Erfindung ist es, ein Verfahren zur Herstellung eines Substrates anzugeben, das über einen langen Zeitraum Wasser speichert und bei dem durch aufgenommenes Wasser hinreichend Düngemittel in den Boden hineingetragen werden kann.

Diese Aufgabe wird dadurch gelöst, dass die Ausgangstoffe, d.h. das wasserspeichernde Material, das Düngemittel und gegebenenfalls zumindest ein Spurenelement, unter Zugabe eines Bindemittels gemischt werden und anschließend zu, insbesondere länglich ausgebildeten, Pellets verpresst werden.

Die Ausgangstoffe, d.h. das wasserspeichernde Material (Polymer in Form des Kaliumpolyacrylat ohne Acrylamid), das Düngemittel und gegebenenfalls zumindest ein Spurenelement, werden unter Zugabe eines Bindemittels gemischt und anschließend beispielsweise in einer Kompaktieranlage zu Pellets verpresst. Das Bindemittel dient auch als Gleitmittel bei der Kompaktierung durch Pressen. Das Bindemittel muss wasserfrei sein, da anderenfalls der Quellvorgang des Kaliumpolyacrylats bereits bei der Herstellung einsetzen würde. Nach dem Mischvorgang wird die Mischung in eine Kompaktieranlage gegeben und verpresst.

Es bietet sich an, wenn das Pressen bei einem Druck zwischen 30 und 70 bar, vorzugsweise bei 60 bar, erfolgt. Ist der beim Pressen vorliegende Druck zu gering, besteht die Gefahr des Zerfließens des fertighergestellten Substrates im Boden und das Düngemittel würde bei starken Niederschlägen zu schnell ausgewaschen werden. Bei zu hohem Druck ist die Wasseraufnahme des Kaliumpolyacyralts nicht mehr gegeben bzw. eingeschränkt.

Infolge des Drucks beim Pressen können die verpressten Pellets eine Temperatur von bis zu 100°C annehmen. Um ein Verkleben der Pellets untereinander zu vermeiden, können die verpressten Pellets nach dem Pressen auf etwa 17°C bis 25°C heruntergekühlt werden.

Es bietet sich an, wenn die Mischung der Ausgangsstoffe vorzugsweise dosiert dem Pressvorgang zugegeben wird.

Die gemischten Ausgangstoffe können zum Pressen auf eine Lochplatte aufgebracht werden, wobei auf der Aufgabeseite der Lochplatte zumindest eine um seine Längsachse drehbar gelagerte Walze, insbesondere Riffelwalze, angeordnet ist, die mit der Lochplatte in Kontakt ist. Jede Riffelwalze ist relativ zu der Lochplatte auf dieser bewegbar. Die Löcher in der Lochplatte weisen einen Durchmesser von etwa 3 mm auf. Die auf dieser Lochplatte laufenden Riffelwalzen drücken die gemischten Ausgangstoffe durch die Löcher. Die gepressten Ausgangsstoffe werden als Strang nach unten aus den Löchern herausgedrückt.

Die gepressten Ausgangstoffe können durch eine auf der Austragsseite der Lochplatte angeordnete Schneideinrichtung, insbesondere auf eine Länge von 6 bis 8 mm, abgelängt werden.

Im Folgenden wird anhand der Zeichnungen das Herstellverfahren des erfindungsgemäßen Substrates erläutert. Es zeigen:
Fig. 1 : den Ablauf des Herstellverfahrens,
Fig. 2 : eine schräge Draufsicht auf die Lochplatte mit vier darauf drehbar gelagerten Riffelwalzen und
Fig. 3 : einen Ausschnitt des Gegenstands nach Fig. 2 in der Seitenansicht.

In allen Figuren werden für gleiche bzw. gleichartige Bauteile übereinstimmende Bezugszeichen verwendet.

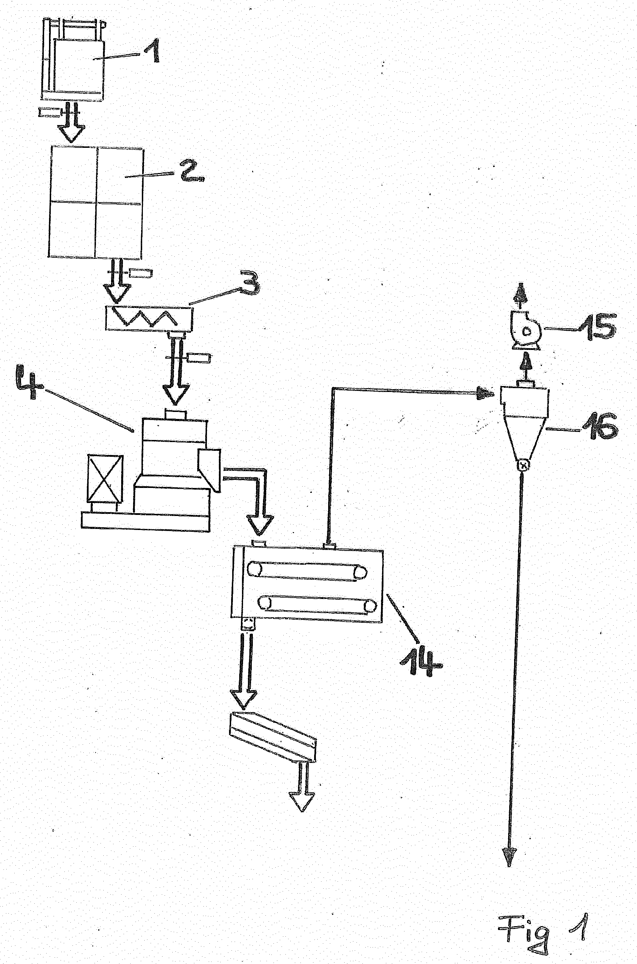

Wie in Fig. 1 dargestellt, sind die verschiedenen Ausgangsstoffe in Behältern 1 bevorratet, wobei in Fig. 1 beispielhaft nur ein Behälter 1 dargestellt ist.

Zunächst werden die Ausgangsstoffe d.h. das wasserspeichernde Material, das Düngemittel und gegebenenfalls zumindest ein Spurenelement, unter Zugabe eines Bindemittels beispielsweise in einem Mischer 2 gemischt. Die gemischten Ausgangsstoffe können in einem nicht dargestellten Vorratsbehälter zwischengelagert werden.

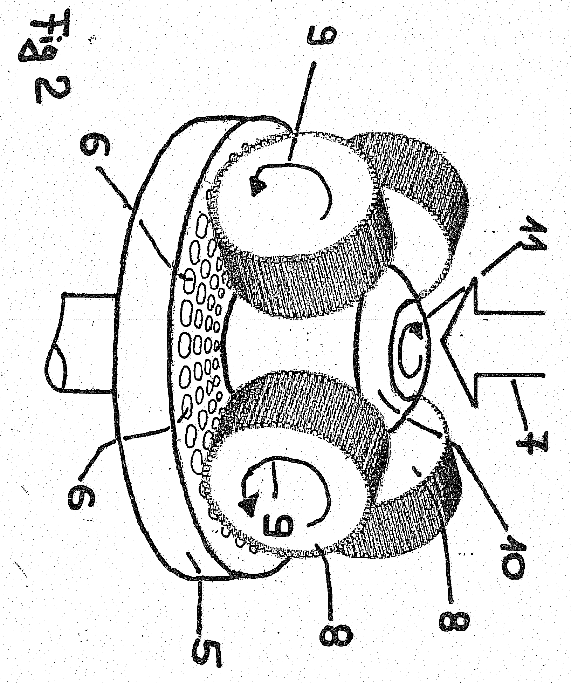

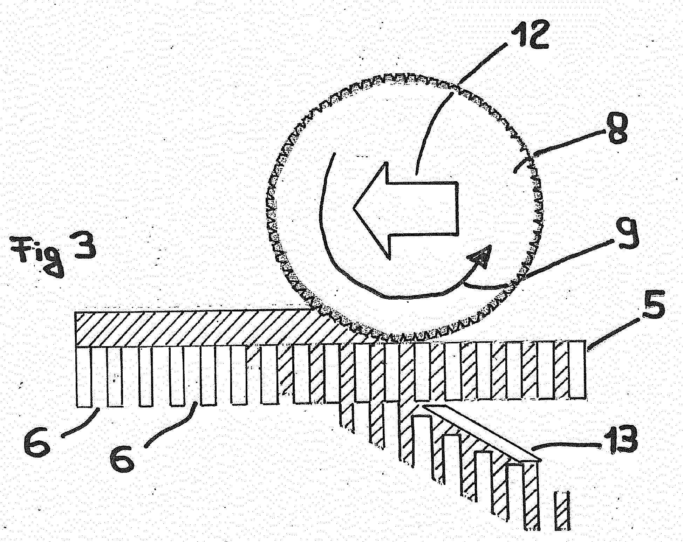

Über eine geeignete Austragseinrichtung, wie z.B. eine Schnecke 3, werden die gemischten Ausgangsstoffe dosiert einer Pressvorrichtung 4 zugeführt, die in Fig. 1 nicht näher im Detail dargestellt ist. Die Pressvorrichtung 4 weist, wie in den Fig. 2 und 3 dargestellt, eine Lochplatte 5 mit Löchern 6 auf. Die Lochplatte 5 ist seitlich von einem nicht dargestellten Wandungsabschnitt umgeben. Die Oberseite der Lochplatte 5 stellt die Aufgabeseite und die Unterseite die Austragsseite dar. Die gemischten Ausgangsmaterialen werden von oben in Richtung des Pfeils 7 dosiert auf die Lochplatte 5 aufgegeben.

Auf der Oberseite der Lochplatte 5, d.h. der Auftragsseite, sind mehrere Riffelwalzen 8 vorgesehen. In dem dargestellten Ausführungsbeispiel sind vier im 90°-Winkel zueinander angeordnete Riffelwalzen 8 vorgesehen. Jede Riffelwalze 8 ist um seine Längsachse herum drehbar (Pfeil 9) an einer Welle 10 gelagert, die mittels eines nicht dargestellten Antriebs in eine Drehbewegung 11 versetzt wird. Dadurch werden die Riffelwalzen 8 relativ zur Lochplatte 5 in Richtung des Pfeils 12 im Kreis über die Lochplatte 5 bewegt. Hierdurch werden die gemischten Ausgangsstoffe zu strangähnlichen Pellets verpresst und durch die Löcher 6 gedrückt.

Unterhalb der Lochplatte 5, d.h. auf der Auftragsseite, ist eine Schneideinrichtung 13 vorgesehen, die die zum Strang verpressten Pellets zu Pellets ablängt.

Beim Pressen kommt es aufgrund des Druckes zu einer Wärmeentwicklung, so dass die fertig gepressten Pellets eine Temperatur von bis zu 100°C erreichen können. Um ein eventuelles Verkleben der Pellets untereinander zu verhindern, werden die fertig gepressten Pellets einer Kühleinrichtung 14, die in dem dargestellten Ausführungsbeispiel als Bandkühler ausgebildet ist, zugeführt, in der die Pellets auf etwa 20°C heruntergekühlt werden.

Zum Absaugen der Luft in der Kühleinrichtung 14 ist ein Ventilator 15 vorgesehen. Eventuell in der abgesaugten Luft enthaltene Feinstäube können mittels eines Zyklons 16 gesammelt und gegebenenfalls dem Prozess vorne wieder zugefügt werden.

Die heruntergekühlten Pellets werden beispielsweise mittels eines nicht dargestellten Förderers einer Siebeinrichtung zugeführt, um Feinanteile abzusieben. Anschließend werden die Pellets einem Verpackungsvorgang zugeführt.

## Patentansprüche

1. Substrat zur Verwendung in Böden, wobei das Substrat zumindest gepressten wasserspeicherndes Material, Düngemittel, und Bindemittel umfasst, worin das wasserspeichernde Material Kalium-Polyacrylat ohne Acrylamid umfasst, worin der Anteil an Düngemittel bezogen auf das Gesamtgewicht des Substrates zwischen 10 Gew.-% und 90 Gew.-% liegt, der Anteil des wasserspeichernden Materials bezogen auf das Gesamtgewicht des Substrates zwischen 10 Gew.-% und 90 Gew.-% liegt, und der Anteil an Bindemittel bezogen auf das Gesamtgewicht des Substrates zwischen 1 Gew.-% und 5 Gew.-% liegt, **dadurch gekennzeichnet, dass** das Bindemittel in Form einer wasserfreien Flüssigkeit besteht.

2. Substrat nach dem vorhergehenden Anspruch, **dadurch gekennzeichnet, dass** das wasserspeichernde Material ausschliesslich aus Kalium-Polyacrylat ohne Acrylamid besteht.

3. Substrat nach einem der vorhergehenden Ansprüche, **dadurch gekennzeichnet, dass** das Substrat weiterhin zumindest ein Spurenelement, insbesondere Bor, Mangan, Molybdän, Eisen, Kupfer und/oder Zink, umfasst.

4. Substrat nach dem vorhergehenden Anspruch, **dadurch gekennzeichnet, dass** der Anteil aller Spurenelemente bezogen auf das Gesamtgewicht des Substrates zwischen 0,5 Gew.-% und 5 Gew.-%, liegt.

5. Substrat nach einem der vorhergehenden Ansprüche, **dadurch gekennzeichnet, dass** zumindest ein Düngemittel etwa 36 Gew.-% Ammoniumsalz, etwa 14 Gew.-% Phosphatsalz, etwa 14 Gew.-% Kaliumsalz, etwa 29 Gew.-% Nitratsalz und etwa 7 Gew.-% Magnesiumsalz umfasst.

6. Substrat nach einem der vorhergehenden Ansprüche, **dadurch gekennzeichnet, dass** zumindest ein Düngemittel etwa 17 Gew.-% Ammoniumsalz und etwa 83 Gew.-% Phosphatsalz umfasst.

7. Substrat nach einem der vorhergehenden Ansprüche, **dadurch gekennzeichnet, dass** zumindest ein Düngemittel etwa 14 Gew.-% Ammoniumsalz, etwa 14 Gew.-% Nitratsalz, etwa 57 Gew.-% Phosphatsalz und etwa 14 Gew.-% Magnesiumsalz umfasst.

8. Substrat nach einem der vorhergehenden Ansprüche, **dadurch gekennzeichnet, dass** zumindest ein Düngemittel etwa 15 Gew.-% Ammoniumsalz, etwa 15 Gew.-% Kaliumsalz, etwa 62 Gew.-% Phosphatsalz und etwa 8 Gew.-% Magnesiumsalz umfasst.

9. Substrat nach einem der vorhergehenden Ansprüche, **dadurch gekennzeichnet, dass** der Anteil an Düngemittel bezogen auf das Gesamtgewicht des Substrates zwischen 10 Gew.-% und 70 Gew.-% liegt.

10. Substrat nach einem der vorhergehenden Ansprüche, **dadurch gekennzeichnet, dass** der Anteil des wasserspeichernden Materials bezogen auf das Gesamtgewicht des Substrates zwischen 10 Gew.-% und 50 Gew.-% liegt.

11. Verfahren zur Herstellung eines Substrates zur Verwendung in Böden, wobei das Substrat als Ausgangsstoffe zumindest ein wasserspeicherndes Material und zumindest ein Düngemittel umfasst,
**dadurch gekennzeichnet, dass** die Ausgangstoffe, d.h. das wasserspeichernde Material, das Düngemittel und gegebenenfalls zumindest ein Spurenelement, unter Zugabe eines Bindemittels in Form einer wasserfreien Flüssigkeit gemischt werden, worin der Anteil an Düngemittel bezogen auf das Gesamtgewicht des Substrates zwischen 10 Gew.-% und 90 Gew.-% liegt, der Anteil des wasserspeichernden Materials bezogen auf das Gesamtgewicht des Substrates zwischen 10 Gew.-% und 90 Gew.-% liegt, und der Anteil an Bindemittel bezogen auf das Gesamtgewicht des Substrates zwischen 1 Gew.-% und 5 Gew.-% liegt, und
anschliessend zu, insbesondere länglich ausgebildeten, Pellets verpresst werden.

12. Verfahren nach dem vorhergehenden Anspruch, **dadurch gekennzeichnet, dass** das Pressen bei einem Druck zwischen 30 und 70 bar erfolgt.

13. Verfahren nach einem der Ansprüche 11 oder 12, **dadurch gekennzeichnet, dass** die verpressten Pellets nach dem Pressen heruntergekühlt werden.

14. Verfahren nach einem der Ansprüche 11 bis 13, **dadurch gekennzeichnet, dass** die Mischung der Ausgangsstoffe dosiert dem Pressvorgang zugegeben wird.

15. Verfahren nach einem der Ansprüche 11 bis 14, **dadurch gekennzeichnet, dass** die gemischten Ausgangstoffe zum Pressen auf eine Lochplatte (5) aufgebracht werden, wobei auf der Aufgabeseite der Lochplatte (5) zumindest eine um seine Längsachse drehbar gelagerte Walze (8) angeordnet ist, die mit der Lochplatte (5) in Kontakt ist.

16. Verfahren nach einem der Ansprüche 11 bis 15, **dadurch gekennzeichnet, dass** die gepressten Ausgangstoffe durch eine auf der Austragsseite der Lochplatte (5) angeordnete Schneideinrichtung (13) abgelängt werden.

## Claims

1. Substrate for use in soils, whereby the substrate comprises at least pressed water-retaining material, fertiliser and binding agent, wherein the water-retaining material comprises potassium polyacrylate without acrylamide, wherein the proportion of fertiliser based on the total weight of the substrate lies between 10 wt% and 90 wt%, the proportion of water-retaining material based on the total weight of the substrate lies between 10 wt% and 90 wt%, and the proportion of the binding agent based on the total weight of the substrate lies between 1 wt% and 5 wt%, **characterised in that** the binding agent is in the form of an anhydrous liquid.

2. Substrate according to the preceding claim, **characterised in that** the water-retaining material consists exclusively of potassium polyacrylate without acrylamide.

3. Substrate according to one of the preceding claims, **characterised in that** the substrate further comprises at least one trace element, in particular boron, manganese, molybdenum, iron, copper and/or zinc.

4. Substrate according to the preceding claim, **characterised in that** the proportion of all trace elements based on the total weight of the substrate lies between 0.5 wt% and 5 wt%.

5. Substrate according to one of the preceding claims, **characterised in that** at least one fertiliser comprises about 36 wt% ammonium salt, about 14 wt% phosphate salt, about 14 wt% potassium salt, about 29 wt% nitrate salt, and about 7 wt% magnesium salt.

6. Substrate according to one of the preceding claims, **characterised in that** at least one fertiliser comprises about 17 wt% ammonium salt and about 83 wt% phosphate salt.

7. Substrate according to one of the preceding claims, **characterised in that** at least one fertiliser comprises about 14 wt% ammonium salt, about 14 wt% nitrate salt, about 57 wt% phosphate salt, and about 14 wt% magnesium salt.

8. Substrate according to one of the preceding claims, **characterised in that** at least one fertiliser comprises about 15 wt% ammonium salt, about 15 wt% potassium salt, about 62 wt% phosphate salt, and about 8 wt% magnesium salt.

9. Substrate according to one of the preceding claims, **characterised in that** the proportion of fertiliser based on the total weight of the substrate lies between 10 wt% and 70 wt%.

10. Substrate according to one of the preceding claims, **characterised in that** the proportion of water-retaining material based on the total weight of the substrate lies between 10 wt% and 50 wt%.

11. Method for manufacturing a substrate for use in soils wherein the substrate comprises at least one water-retaining material and at least one fertiliser as basic materials,
**characterised in that** the basic materials, i.e. the water-retaining material, the fertiliser and where necessary at least one trace element, are mixed with the addition of a binding agent in the form of an anhydrous liquid, whereby the proportion of fertiliser based on the total weight of the substrate lies between 10 wt% and 90 wt%, the proportion of water-retaining material based on the total weight of the substrate lies between 10 wt% and 90%, and the proportion of binding agent based on the total weight of the substrate lies between 1 wt% and 5 wt%, and
are subsequently pressed into pellets, in particular of an elongated nature.

12. Method according to the preceding claim, **characterised in that** pressing is carried out at a pressure of between 30 and 70 bar.

13. Method according to one of claims 11 or 12, **characterised in that** the compressed pellets are cooled after pressing.

14. Method according to one of claims 11 to 13, **characterised in that** the mixture of the basic materials is used in the pressing method in doses.

15. Method according to one of claims 11 to 14, **characterised in that** the mixed basic materials are applied to a perforated plate (5) for pressing, wherein at the input end of the perforated plate (5) at least one on its longitudinal axis rotatable roller (8) is arranged, which is in contact with the perforated plate (5).

16. Method according to one of claims 11 to 15, **characterised in that** the pressed basic materials are cut to length by a cutting tool (13) positioned at the output end of the perforated plate (5).

## Revendications

1. Substrat à utiliser dans les sols, où le substrat comporte au minimum un matériau de rétention d'eau compacté, un fertilisant et un liant, où le matériau de rétention d'eau comprend du polyacrylate de potassium sans acrylamide, où la part du fertilisant par rapport au poids total du substrat est entre 10 % pds et 90 % pds, où la part du matériau de rétention d'eau par rapport au poids total du substrat est entre 10 % pds et 90 % pds, et la part de liant par rapport au poids total du substrat est entre 1 % pds et 5 % pds, **caractérisé par le fait que** le liant se présente sous la forme d'un liquide anhydre.

2. Substrat conforme à la revendication précédente, **caractérisé par le fait que** le matériau de rétention d'eau se compose exclusivement de polyacrylate de potassium sans acrylamide.

3. Substrat conforme à une des revendications précédentes, **caractérisé par le fait que** le substrat comprend en outre au moins un oligo-élément, en particulier, bore, manganèse, molybdène, fer, cuivre et/ou zinc.

4. Substrat conforme à la revendication précédente, **caractérisé par le fait que** la part de tous les oligo-éléments par rapport au poids total du substrat représente entre 0,5 % pds et 5 % pds.

5. Substrat conforme à une des revendications précédentes, **caractérisé par le fait qu'**au moins un fertilisant contient environ 36 % pds de sel d'ammonium, environ 14 % pds de sel de phosphate, environ 14 % pds de sel de potassium, environ 29 % pds de sel de nitrate et environ 7 % pds de sel de magnésium.

6. Substrat conforme à une des revendications précédentes, **caractérisé par le fait qu'**au moins un fertilisant contient environ 17 % pds de sel d'ammonium et environ 83 % pds de sel de phosphate.

7. Substrat conforme à une des revendications précédentes, **caractérisé par le fait qu'**au moins un fertilisant contient environ 14 % pds de sel d'ammonium, environ 14 % pds de sel de nitrate, environ 57 % pds de sel de phosphate, et environ 14 % pds de sel de magnésium.

8. Substrat conforme à une des revendications précédentes, **caractérisé par le fait qu'**au moins un fertilisant contient environ 15 % pds de sel d'ammonium, environ 15 % pds de sel de potassium, environ 62 % pds de sel de phosphate, et environ 8 % pds de sel de magnésium.

9. Substrat conforme à une des revendications précédentes, **caractérisé par le fait que** la part de fertilisant par rapport au poids total du substrat représente entre 10 % pds et 70 % pds.

10. Substrat conforme à une des revendications précédentes, **caractérisé par le fait que** la part de matériau de rétention d'eau par rapport au poids total du substrat représente entre 10 % pds et 50 % pds.

11. Procédure de fabrication d'un substrat à utiliser dans les sols, où le substrat comme matière de base comprend au moins un matériau de rétention d'eau et au moins un fertilisant,
**caractérisé par le fait que** la matière de base, c'est-à-dire le matériau de rétention d'eau, le fertilisant et le cas échéant au moins un oligo-élément, sont mélangés avec apport d'un liant sous forme de liquide anhydre, où la part du fertilisant par rapport au poids total du substrat est entre 10 % pds et 90 % pds, où la part du matériau de rétention d'eau par rapport au poids total du substrat est entre 10 % pds et 90 % pds, et la part de liant par rapport au poids total du substrat est entre 1 % pds et 5 % pds, et
ensuite compactés en granulés, notamment de forme oblongue.

12. Procédure conforme à la revendication précédente, **caractérisée par le fait que** le compactage a lieu à une pression comprise entre 30 et 70 bar.

13. Procédure conforme à une des revendications 11 ou 12, **caractérisée par le fait que** les granulés compactés sont refroidis après compactage.

14. Procédure conforme à une des revendications 11 à 13, **caractérisée par le fait que** le mélange des matériaux de base est ajouté dosé au processus de compactage.

15. Procédure conforme à une des revendications 11 à 14, **caractérisée par le fait que** les matériaux de base mélangés sont appliqués pour le compactage sur une plaque perforée (5), où du côté réception de la plaque perforée (5) est placé au moins un rouleau pivotant autour de son axe longitudinal (8), qui est en contact avec la plaque perforée (5).

16. Procédure conforme à une des revendications 11 à 15, **caractérisée par le fait que** les matériaux de base compactés sont découpés par un dispositif de coupe (13) placé du côté sortie de la plaque perforée (5).
